# FASCICULE DE BREVET EUROPEEN

(11) **EP 4 407 879 B1**
(45) Date de publication et mention de la délivrance du brevet: **07.05.2025**
(21) Numéro de dépôt: 24153578.0
(22) Date de dépôt: 24.01.2024
(51) Int. Cl.: H04B 3/54, H04L 69/18

(54) **PROCÉDÉ DE CONTRÔLE ET DE COMMUTATION D'UN MICROLOGICIEL**
VERFAHREN ZUR STEUERUNG UND UMSCHALTUNG VON FIRMWARE
METHOD FOR MONITORING AND SWITCHING FIRMWARE

(30) Priorité: 25.01.2023 FR 2300668
(43) Date de publication de la demande: 31.07.2024
(73) Titulaire: SAGEMCOM ENERGY & TELECOM SAS, 92270 Bois-Colombes (FR)
(72) Inventeur: TEBOULLE, Henri, 92270 BOIS-COLOMBES (FR)
(74) Mandataire: Cabinet Le Guen Maillet

(56) Documents cités:
- US-A1- 2016 127 515

## Description

### DOMAINE TECHNIQUE

L'invention concerne le domaine de la gestion de version d'un micrologiciel d'accès à un réseau de communication ayant une topologie logique sous forme d'arbre de dispositifs nœuds implémenté sur un réseau d'alimentation électrique.

### ETAT DE LA TECHNIQUE ANTERIEURE

D'une manière connue, de nombreux réseaux de communication ont une topologie (au moins au niveau logique) sous forme d'arbre pour permettre d'étendre la portée des communications. Les dispositifs d'un tel réseau de communication sont généralement appelés nœuds. Un dispositif nœud tient le rôle de racine du réseau de communication et gère le réseau de communication de manière à organiser le partage d'un même support de communication : émission de balises, gestion de topologie, etc. Des dispositifs nœuds servent alors de relais pour le compte d'autres dispositifs nœuds du réseau de communication lorsque ces derniers n'arrivent pas à recevoir directement des informations du dispositif nœud racine (également appelé « nœud de base »).

On trouve notamment de tels réseaux de communication dans le cadre des réseaux d'alimentation électrique de type AMM (« Automated Meter Management » en anglais), dans lesquels des communications sont établies entre des compteurs électriques, dits intelligents (« smart meters » en anglais), et un dispositif concentrateur de données (« data concentrator » en anglais), parfois appelé nœud de base (« base node » en anglais). C'est le cas par exemple dans les spécifications PRIME (« PoweRline Intelligent Metering Evolution » en anglais). Le dispositif concentrateur est alors la racine du réseau de communication. Les échanges entre les compteurs électriques et le dispositif concentrateur de données s'appuient sur des communications par courants porteurs en ligne (« PowerLine Communications » en anglais).

Pour permettre de maintenir la synchronisation des dispositifs nœuds au sein du réseau de communication, des balises (« beacons » en anglais) sont périodiquement transmises. Les balises sont transmises durant des intervalles de temps prédéfinis de chaque trame émise dans le réseau de communication. Le document D1= US2016127515A1 concerne généralement la communication fiable entre dispositifs, et en particulier la communication sur les lignes électriques.

Un problème posé par ce type de mécanisme de synchronisation par balises est que parfois un dispositif nœud ne reçoit pas la balise et ne se synchronise pas.

Ainsi, dans le cas d'ordre de commutation du micrologiciel (*firmware* en anglais) d'accès au réseau, il est possible que certains dispositifs nœuds ne commutent pas. En l'absence de commutation en temps voulu, le dispositif nœud finit par ne plus pouvoir communiquer sur le réseau de communication.

Dans ce contexte, il est nécessaire de fournir un procédé de contrôle et de commutation de version du micrologiciel d'accès au réseau de communication, qui puisse être exécuté automatiquement par un dispositif nœud pour vérifier régulièrement que le dispositif nœud utilise la version du micrologiciel d'accès qui implémente la version du protocole de communication utilisée par le dispositif concentrateur sur le réseau de communication.

### EXPOSE DE L'INVENTION

A cet effet, selon un premier aspect, il est proposé un procédé de contrôle et de commutation de version d'un micrologiciel d'accès à un réseau de communication qui a une topologie logique sous forme d'arbre de dispositifs nœuds et qui est implémenté sur un réseau d'alimentation électrique, le réseau de communication comprenant un dispositif concentrateur. Le procédé est implémenté par un dispositif nœud comprenant de la circuiterie électronique et le procédé comprend une première phase comprenant les étapes suivantes :
- déclencher une première temporisation, et vérifier la réception, durant la première temporisation, d'une trame quelconque permettant d'identifier une version du protocole de communication utilisée par le dispositif concentrateur ;
- si la version du micrologiciel utilisée par le dispositif nœud implémente la version du protocole de communication utilisée par le dispositif concentrateur, alors réitérer la première phase, et sinon déclencher une deuxième phase comprenant les étapes suivantes :
- déclencher une deuxième temporisation, et vérifier la réception, durant la deuxième temporisation, de trames de gestion du réseau de type « balise » émises par le dispositif concentrateur ou par un autre dispositif nœud, et/ou de trames de gestion de réseau de type « demande de promotion » émises par un autre dispositif nœud, les trames de gestion du réseau permettant d'identifier une version du protocole de communication utilisée ;
- si un premier nombre prédéterminé M de trames de gestion du réseau de type « balise » reçues et/ou un deuxième nombre prédéterminé N de trames de gestion du réseau de type « demande de promotion » reçues permettent d'identifier une version du protocole de communication utilisée par le dispositif concentrateur ou par un autre dispositif nœud, qui n'est pas implémentée par la version du micrologiciel utilisée par dispositif nœud, alors commuter le dispositif nœud dans une autre version du micrologiciel qui implémente la version du protocole de communication utilisée par le dispositif concentrateur ou par le dispositif relais, puis réitérer la première phase ;
- si un nombre de trames de gestion du réseau de type « balise » reçues est strictement supérieur à zéro et strictement inférieur au premier nombre prédéterminé M et si un nombre de trames de gestion du réseau de type « demande de promotion » reçues est strictement supérieur à zéro et strictement inférieur au deuxième nombre prédéterminé N, alors réitérer la deuxième phase ;
- si aucune trame de gestion du réseau n'est reçue, alors commuter dans une autre version du micrologiciel, puis réitérer la première phase.

Ainsi, d'une manière particulièrement astucieuse, le procédé selon l'invention utilise des champs de bits des trames de gestion du réseau pour vérifier de manière automatique, redondante et continue qu'un dispositif nœud utilise la même version du protocole de communication sur le réseau de communication, que le dispositif concentrateur.

Ainsi, l'invention propose un procédé de contrôle et de commutation de version du micrologiciel d'accès au réseau de communication, qui peut être exécuté automatiquement par un dispositif nœud pour vérifier régulièrement que le dispositif nœud utilise une version du micrologiciel d'accès qui implémente la version du protocole de communication utilisée par le dispositif concentrateur sur le réseau de communication.

Selon une disposition particulière, chaque trame de gestion du réseau comprend un champ de bits dont la valeur est prédéfinie selon la version du protocole de communication utilisée, de sorte que la valeur du champ de bits indique la version du protocole de communication utilisée par le dispositif concentrateur et/ou un autre dispositif nœud.

Selon une disposition particulière, les trames de gestion du réseau reçues qui sont de type « balise » sont des intervalles de temps prédéfinis de trames transmises au sein du réseau de communication et permettent à l'ensemble des dispositifs nœuds de se synchroniser avec le dispositif concentrateur.

Selon une disposition particulière, le champ de bits est un résultat d'un contrôle de redondance cyclique dont la valeur indique la version du protocole de communication utilisée par le dispositif concentrateur et/ou un autre dispositif nœud.

Selon une disposition particulière, les trames de gestion du réseau reçues qui sont de type « demande de promotion » sont des intervalles de temps prédéfinis de trames transmises au sein du réseau de communication et permettent au dispositif concentrateur de faire passer un dispositif nœud en dispositif relais.

Selon une disposition particulière, le champ de bits est un octet de poids fort comprenant quatre bits de poids faible, les quatre bits de poids faible étant utilisés pour indiquer la version du protocole de communication utilisée par le dispositif concentrateur et/ou un autre dispositif nœud.

Selon une disposition particulière, lors de la deuxième phase, si aucune trame de gestion du réseau n'est reçue, alors le dispositif nœud commute dans une autre version du micrologiciel qui implémente la version du protocole de communication utilisée par le dispositif concentrateur, puis réitère la première phase en réinitialisant la première temporisation selon une valeur prédéterminée.

Selon une disposition particulière, le procédé comprend une étape préalable d'initialiser la première temporisation et la deuxième temporisation, selon des valeurs prédéterminées.

Selon une disposition particulière, l'étape consistant à vérifier la réception, durant la deuxième temporisation, de trames de gestion du réseau, est réalisée en vérifiant la réception de trames de gestion du réseau émises par une pluralité de dispositifs du réseau de communication.

Selon un autre aspect, il est proposé un dispositif nœud comprenant de la circuiterie électronique pour exécuter le procédé selon l'invention.

Selon un autre aspect, il est proposé un produit programme d'ordinateur comprenant des instructions de code de programme pour exécuter le procédé selon l'invention, lorsque lesdites instructions sont exécutées par au moins un processeur.

Selon un autre aspect, il est proposé un support de stockage non transitoire sur lequel est stocké un programme d'ordinateur comprenant des instructions de code de programme pour exécuter le procédé selon l'invention, lorsque lesdites instructions sont lues depuis ledit support de stockage non transitoire et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication dont la topologie logique est sous forme d'arbre, déployé sur un réseau d'alimentation électrique et dans lequel l'invention peut être mise en œuvre ;
[Fig. 2] illustre schématiquement un procédé de contrôle et de commutation de version d'un micrologiciel d'accès à un réseau de communication, selon l'invention ;
[Fig. 3] illustre schématiquement la structure d'une trame de gestion du réseau de type « balise » envoyée en utilisant une première version d'un protocole de communication ;
[Fig. 4] illustre schématiquement la structure d'une trame de gestion du réseau de type « balise » envoyée en utilisant une deuxième version d'un protocole de communication ;
[Fig. 5] illustre schématiquement la structure d'une trame de gestion du réseau de type « demande de promotion » envoyée en utilisant une première version d'un protocole de communication ;
[Fig. 6] illustre schématiquement la structure d'une trame de gestion du réseau de type « demande de promotion » envoyée en utilisant une deuxième version d'un protocole de communication ;
[Fig. 7] illustre schématiquement un agencement matériel d'un système informatique qui comprend de la circuiterie électronique pour implémenter le procédé de contrôle et de commutation de version d'un micrologiciel d'accès à un réseau de communication.

### EXPOSE DETAILLE DE MODES DE REALISATION

### Réseau de communication

La description qui suit détaille la présente invention dans le cadre d'un réseau de communication, dont la topologie logique est sous forme d'arbre, c'est-à-dire hiérarchique à partir d'un dispositif racine, déployé sur un réseau d'alimentation électrique, afin de mettre en œuvre des services de type AMM. Il convient toutefois de noter que la présente invention s'applique à tout réseau de communication, dont la topologie logique est sous forme d'arbre, c'est-à-dire hiérarchique à partir d'un dispositif racine, dans lequel des dispositifs agissent comme dispositifs relais de synchronisation par balises pour permettre d'établir des communications entre tout dispositif du réseau de communication et ledit dispositif racine.

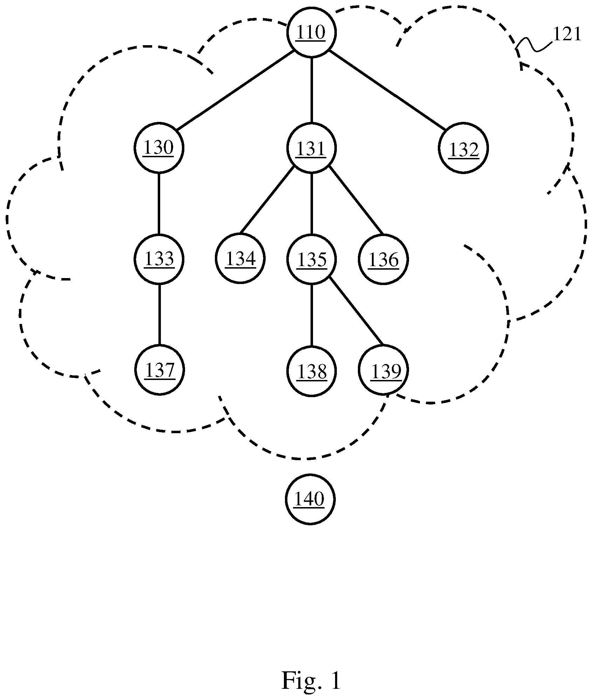

La Fig. 1 illustre schématiquement un réseau de communication 121 ayant une topologie logique sous forme d'arbre déployé sur un réseau d'alimentation électrique et dans lequel l'invention peut être mise en œuvre.

Le réseau de communication 121 est en forme d'arbre dont un dispositif nœud particulier 110, appelé dispositif concentrateur 110 ou nœud de base, est la racine. Le réseau de communication 121 est destiné à permettre de connecter une pluralité de dispositifs nœuds au dispositif concentrateur 110. Dans le cadre de la Fig. 1, les dispositifs nœuds que le réseau de communication 121 vise à connecter sont des compteurs électriques. Le réseau de communication 121 permet ainsi d'établir des communications à courants porteurs en ligne afin que le dispositif concentrateur 110 puisse notamment procéder automatiquement à des relevés de comptage de consommation électrique effectués par les compteurs électriques.

Il est nécessaire de comprendre que, dans un tel réseau de communication, un signal émis par un dispositif nœud n'est en général pas visible en tout point dudit réseau de communication. Chaque dispositif nœud émetteur de signaux dispose alors d'un « domaine de voisinage », c'est-à-dire d'un sous-ensemble dudit réseau de communication dans lequel tout dispositif nœud connecté peut recevoir de manière intelligible lesdits signaux. Le domaine de voisinage correspond à la portée des signaux émis, en fonction de paramètres prédéterminés de transmission (e.g. puissance, schéma de modulation et de codage...) du dispositif nœud émetteur du signal et également en fonction de caractéristiques du canal de communication (atténuation, bruit, impédance...). Chaque dispositif nœud dudit réseau de communication dispose ainsi de son propre domaine de voisinage.

Pour permettre d'étendre la portée des communications à courants porteurs en ligne, des dispositifs nœuds jouent le rôle de relais de données entre d'autres dispositifs nœuds et le dispositif concentrateur 110. Un tel dispositif relais est appelé commutateur (« switch » en anglais) dans les spécifications PRIME. Certaines communications entre des dispositifs nœuds et le dispositif concentrateur 110 peuvent nécessiter plusieurs relais de données successifs. Un dispositif nœud ne jouant pas le rôle de relais est appelé dispositif terminal. Une telle structure définit donc des rattachements de dispositifs nœuds les uns aux autres pour former l'arbre, c'est-à-dire la hiérarchie constituant le réseau de communication 121. Chaque dispositif nœud du réseau de communication 121 est ainsi associé à un niveau hiérarchique, correspondant typiquement à la quantité de dispositifs relais via lesquels ledit dispositif nœud doit passer pour atteindre la racine du réseau de communication 121.

Outre le relais de données, les dispositifs relais émettent des balises 300, qui permettent aux dispositifs nœuds 130-139 qui leur sont rattachés de se synchroniser avec le réseau de communication 121. L'envoi de ces balises est effectué dans des intervalles de temps respectifs prédéfinis. La structure de ces balises 300 sera définie ci-après.

Un tel réseau de communication sous forme d'arbre est donc représenté sur la Fig. 1. Un dispositif nœud terminal 132 est directement rattaché au dispositif concentrateur 110. Deux autres dispositifs nœuds 130 et 131 sont aussi directement rattachés au dispositif concentrateur 110. Ces deux dispositifs nœuds 130 et 131 jouent le rôle de dispositifs relais entre le dispositif concentrateur 110 et d'autres dispositifs nœuds. Le dispositif nœud 130 joue le rôle de dispositif relais entre le dispositif concentrateur 110 et un dispositif nœud 133 qui, lui-même, joue le rôle de dispositif relais entre le dispositif nœud 130 et un dispositif terminal 137. Les communications entre le dispositif concentrateur 110 et le dispositif terminal 137 passent donc par deux dispositifs relais successifs, à savoir les dispositifs relais 130 et 133. Le dispositif nœud 131 joue le rôle de dispositif relais entre le dispositif concentrateur 110 et trois autres dispositifs nœuds 134, 135 et 136. Les dispositifs nœuds 134 et 136 sont des dispositifs terminaux, et le dispositif nœud 135 joue le rôle de dispositif relais entre le dispositif nœud 131 et deux dispositifs terminaux 138 et 139. Ainsi, les dispositifs nœuds 130, 131 et 132 sont associés à un niveau hiérarchique de valeur « 0 », les dispositifs nœuds 133, 134, 135, 136 sont associés à un niveau hiérarchique de valeur « 1 », et ainsi de suite.

Un dispositif nœud qui n'est pas rattaché au réseau de communication 121 est un dispositif déconnecté (« *disconnected* » en anglais), tel que le dispositif nœud 140 sur la Fig. 1.

Il faut comprendre que la topologie logique du réseau de communication 121 n'est pas figée. La Fig. 1 représente la topologie logique du réseau de communication 121 à un instant donné. A cause notamment des phénomènes d'interférences (tels que bruit, atténuation, variation d'impédance, diaphonie, collision de signaux...), des dispositifs nœuds peuvent se trouver déconnectés du réseau de communication 121 et cherchent alors à se réenregistrer au sein du réseau de communication 121. La topologie logique du réseau de communication 121 à ce moment-là est alors probablement différente de la topologie logique du réseau de communication 121 avant déconnexion desdits dispositifs nœuds, des dispositifs nœuds ayant alors été potentiellement déchus de leur rôle de relais et d'autres ayant alors été potentiellement promus pour jouer le rôle de relais. La promotion d'un dispositif nœud 130-139 en dispositif relais est réalisée par l'envoi d'une demande de promotion 400 (*Promotion Needed Protocol Data Unit* en anglais, abrégé en PNPDU), d'un dispositif nœud qui cherche à se connecter au réseau de communication 121 et qui n'a pas de dispositif relais comme voisin, tel le dispositif nœud 140, au dispositif nœud 130-139 à promouvoir en dispositif relais. La structure d'une demande de promotion 400 sera détaillée ci-après.

Par ailleurs, le dispositif concentrateur 110 utilise une version d'un protocole de communication pour transmettre des informations à l'ensemble des dispositifs nœuds 130-139 du réseau de communication 121. Lorsque le dispositif concentrateur 110 change de version du protocole de communication, il envoie un ordre de commutation du micrologiciel d'accès au réseau à l'ensemble des dispositifs nœuds 130-139. Les dispositifs nœuds 130-139 commutent alors dans une autre version du micrologiciel qui permet d'implémenter la nouvelle version du protocole de communication utilisée par le dispositif concentrateur 110. Cependant, il peut arriver qu'un dispositif nœud 130-139 ne reçoive pas l'ordre de commutation et reste avec une ancienne version du micrologiciel. Le dispositif nœud risque alors de ne plus recevoir les trames émises par le dispositif concentrateur et d'être déconnecté du réseau de communication. Pour éviter ce problème, il est proposé le procédé de contrôle et de commutation détaillé ci-après.

### Procédé de contrôle et de commutation

En référence à la Fig. 1, selon un premier aspect, il est proposé un procédé 1 de contrôle et de commutation de version d'un micrologiciel d'accès au réseau de communication 121.

Le procédé est implémenté par chaque dispositif nœud 130-140 du réseau de communication 121. Ainsi, chaque dispositif nœud 130-140 comprend de la circuiterie électronique 200 lui permettant d'implémenter le procédé 1.

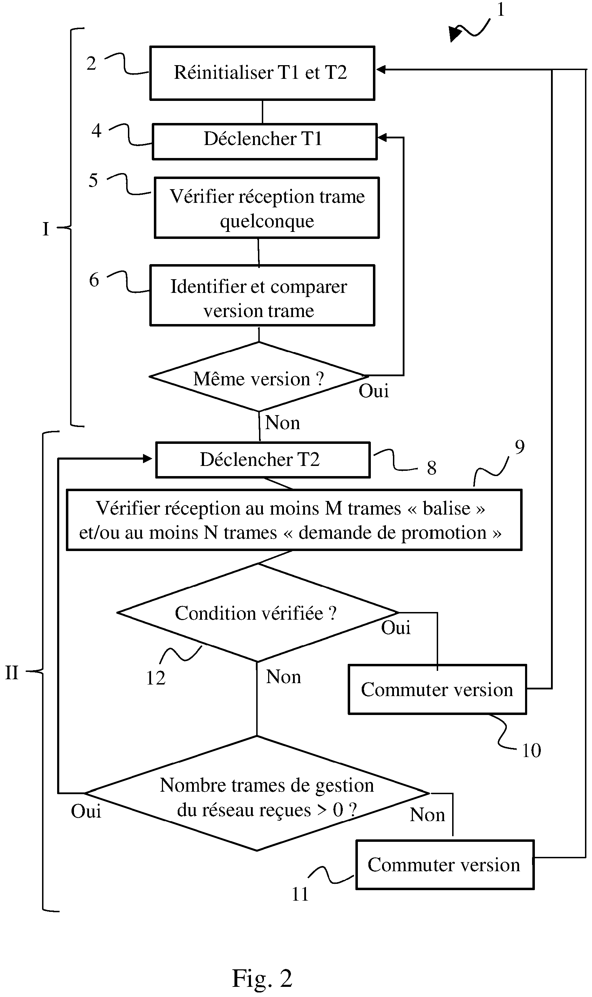

Tel que schématisé sur la Fig. 2, le procédé 1 comprend principalement une première phase I et une deuxième phase II.

### Première phase I

Dans la première phase I, le procédé 1 comprend une étape 4 consistant à déclencher une première temporisation. Puis, le procédé 1 comprend une étape 5 consistant à vérifier, pendant la première temporisation T1, la réception d'une trame quelconque émise par le dispositif concentrateur 110 et/ou un autre dispositif nœud (130-140) agissant comme un dispositif relais ou comme un dispositif terminal. La trame quelconque permettant d'identifier une version du protocole de communication utilisée par le dispositif concentrateur 110. Ainsi, en d'autres termes, selon l'étape 5, le dispositif nœud 130-140 écoute le réseau de communication 121 et reçoit une trame quelconque envoyée par le dispositif concentrateur 110 et/ou un autre dispositif nœud (130-140) agissant comme un dispositif relais ou comme un dispositif terminal. Tel que cela sera détaillé ci-après, pour le cas particulier des balises 300 et des demandes de promotion 400, la structure de chaque trame permet d'identifier la version du protocole de communication utilisée par le dispositif concentrateur 110 sur le réseau de communication 121. Ainsi, chaque trame émise par le dispositif concentrateur 110 (ou par un dispositif nœud (130-140) agissant comme un dispositif relais ou comme un dispositif terminal) comprend des informations permettant d'identifier la version du protocole de communication utilisée par le dispositif concentrateur 110 (ou par un dispositif nœud (130-140) agissant comme un dispositif relais ou comme un dispositif terminal).

Lorsqu'une trame quelconque est reçue, le procédé 1 comprend une étape 6, dans laquelle le dispositif nœud 130-140 identifie la version du protocole de communication utilisée par le dispositif concentrateur 110 et compare une version du micrologiciel utilisée par le dispositif nœud 130-140 et la version du protocole de communication utilisée par le dispositif concentrateur 110. La comparaison consiste à déterminer si la version du micrologiciel utilisée par le dispositif nœud 130-1140 implémente, ou non, la version du protocole de communication utilisée par le dispositif concentrateur 110.

Ainsi, en d'autres termes, la comparaison de l'étape 6 peut consister, pour le dispositif nœud 130-140, à déterminer s'il peut lire la trame, ou pas. Si le dispositif nœud 130-140 peut lire la trame quelconque, alors il utilise la version du micrologiciel qui implémente la version du protocole de communication utilisée par le dispositif concentrateur 110. Au contraire, s'il apparait que la trame est illisible par le dispositif nœud 130-140, alors c'est que le dispositif nœud 130-140 utilise une version du micrologiciel qui n'implémente pas la version du protocole de communication utilisée par le dispositif concentrateur 110.

Si la version du micrologiciel utilisée par le dispositif nœud 130-140 implémente la version du protocole de communication utilisée par le dispositif concentrateur 110, alors le dispositif nœud 130-140 réitère la première phase I.

### Deuxième phase II

Si la version du micrologiciel utilisée par le dispositif nœud 130-140 n'implémente pas la version du protocole de communication utilisée par le dispositif concentrateur 110, alors le dispositif nœud 130-140 déclenche la deuxième phase II du procédé 1.

La deuxième phase II comprend une étape 8 qui consiste à déclencher une deuxième temporisation T2. Puis, la deuxième phase II comprend une étape 9 qui consiste à vérifier durant la deuxième temporisation T2, la réception de trames de gestion du réseau émises par le dispositif concentrateur 110 ou par un autre dispositif nœud 130-140 agissant comme dispositif relais entre le dispositif concentrateur 110 et le dispositif nœud 130-140 ou par un autre dispositif nœud 130-140 agissant comme dispositif terminal.

Les trames de gestion du réseau permettent d'identifier une version du protocole de communication utilisée par le dispositif concentrateur 110 ou par un autre dispositif nœud (130-140) agissant comme un dispositif relais ou comme un dispositif terminal. En d'autres termes, selon l'étape 8, s'il apparaît que le micrologiciel utilisé par le dispositif nœud 130-139 n'implémente pas la version du protocole de communication utilisée par le dispositif concentrateur 110, alors le dispositif nœud 130-139 écoute précisément les trames de gestion du réseau émises par le dispositif concentrateur 110 ou un autre dispositif nœud 130-140. Tel que cela sera détaillé ci-après, selon une disposition technique particulièrement avantageuse de l'invention, l'analyse de certains champs de bits dans la structure des trames de gestion du réseau permet de connaître précisément la version du protocole de communication utilisée.

Il est précisé que selon une disposition particulière, à l'étape 8, le dispositif nœud 130-140 vérifie la réception de trames de gestion émises par plusieurs dispositifs connectés au réseau de communication 121. En d'autres termes, selon cette disposition, le dispositif nœud 130-140 écoute des trames de gestion du réseau émises depuis plusieurs sources différentes.

Si (condition 12) le dispositif nœud capte un premier nombre prédéterminé M de trames de gestion du réseau de type « balise », et/ou un deuxième nombre prédéterminé N de trames de gestion du réseau de type « demande de promotion », qui indiquent chacune une version du protocole de communication qui n'est pas implémentée par la version du micrologiciel utilisée par le dispositif nœud 130-140, alors le procédé 1 comprend une étape 10 consistant à commuter le dispositif nœud 130-140 dans une autre version du micrologiciel qui implémente la version du protocole de communication utilisée par le dispositif concentrateur 110 et/ou un autre dispositif nœud 130-140. Puis le dispositif nœud 130-140 réitère la première phase I du procédé 1.

Selon une disposition particulièrement avantageuse, le dispositif nœud 130-140 réitère la première phase I du procédé en réinitialisant la première temporisation T1 (étape 2). Typiquement la première temporisation T1 peut être réinitialisée pour avoir une durée de 6 heures.

L'analyse d'un premier nombre prédéterminé M de trames de gestion de type « balise » 300 et d'un deuxième nombre prédéterminé N de trames de gestion de type « demande de promotion » 400 reçues sur la deuxième temporisation T2 est une disposition technique particulièrement avantageuse de l'invention. En effet, cette disposition permet de s'assurer que la plupart des trames de gestion du réseau reçues durant la deuxième temporisation T2, indiquent bien une même version protocole de communication utilisée par le dispositif concentrateur 110 et/ou un autre dispositif nœud 130-140. En d'autres termes, cette disposition permet d'éviter qu'une erreur ponctuelle dans l'émission d'une trame de gestion du réseau ne déclenche un changement de version du micrologiciel par le dispositif nœud 130-140.

Typiquement, le premier nombre prédéterminé M peut être un entier positif compris entre 5 et 11 et plus particulièrement entre 7 et 9 inclus et le deuxième nombre prédéterminé N peut être un entier positif compris entre 4 et 9 et plus particulièrement entre 5 et 7.

Si un nombre de trames de gestion du réseau reçu de type « balise » 300 est strictement supérieur à zéro mais strictement inférieur au premier nombre prédéterminé M, et un nombre de trames de gestion du réseau reçu de type « demande de promotion » 400 est strictement supérieur à zéro mais strictement inférieur au deuxième nombre prédéterminé N, alors le dispositif nœud 130-140 réitère la deuxième phase II du procédé 1.

Si aucune trame de gestion du réseau n'est reçue, alors le procédé 1 comprend une étape 11 qui consiste à commuter dans une autre version du micrologiciel. Puis le procédé 1 réitère la première phase I en réinitialisant la première temporisation T1. Typiquement la première temporisation T1 peut être réinitialisée pour avoir une durée d'une heure. En d'autres termes, l'étape 11 est exécutée si le dispositif nœud 130-139 ne reçoit aucune trame de gestion du réseau. Dans ce cas, et selon le principe de fonctionnement du réseau de communication de type PRIME qui a été exposé ci-avant, il est probable que le dispositif nœud 130-140 ait été déconnecté du réseau de communication. En conséquence, le dispositif nœud 130-139 change de version du micrologiciel pour être reconnecté au réseau de communication 121. Puis le dispositif nœud 130-140 réitère la phase I en réinitialisant la première temporisation T1 sur une courte durée. Ainsi, cela permet de détecter rapidement une erreur. En effet, le changement de version du micrologiciel doit permettre de reconnecter le dispositif nœud 130-140 au réseau de communication 121, de sorte que le dispositif nœud 130-139 recevra nécessairement au moins une trame quelconque durant la première temporisation T1.

### Initialisation des durées de temporisation

D'une manière particulièrement avantageuse, le procédé 1 peut comprendre une étape préalable 2 d'initialisation de chaque temporisation T1 et T2.

Selon un mode de réalisation particulier, la première temporisation T1 peut par exemple être définie comme étant égale à 6 heures.

Selon un mode de réalisation particulier, la deuxième temporisation T2 peut par exemple être définie comme étant égale à 1 heure.

Les trames de gestions du réseau reçues et utilisées sont préférentiellement de type « balise » 300 ou de type « demande de promotion » 400, telles que décrites précédemment.

Le procédé 1 selon l'invention utilise une connaissance particulière des structures des trame de gestion du réseau de type « balise » 300 et de type « demande de promotion » 400, pour déterminer la version du protocole de communication utilisée pour envoyer les trames de gestion du réseau de type « balise » 300 et de type « demande de promotion » 400.

### Structure des balises

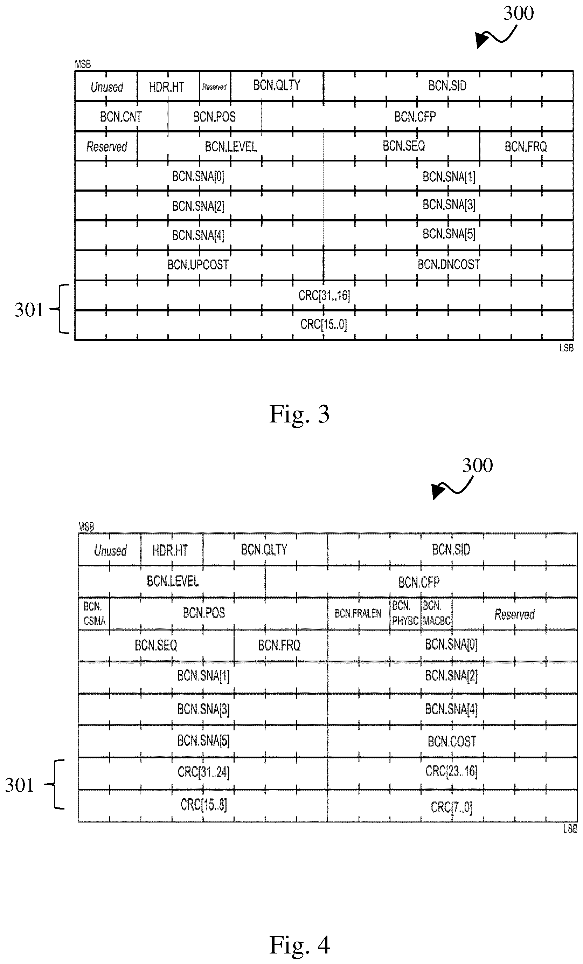

La Fig. 3 illustre schématiquement la structure d'une trame de gestion du réseau de type « balise » 300 envoyée en utilisant une première version du protocole de communication sur le réseau de communication 121.

La Fig. 4 illustre schématiquement la structure d'une trame de gestion du réseau de type « balise » 300 envoyée en utilisant une deuxième version du protocole de communication sur le réseau de communication 121.

Quelle que soit la version du protocole de communication utilisée, chaque trame de gestion du réseau de type « balise » 300 présente un champ de bits 301 qui est un résultat d'un contrôle de redondance cyclique CRC dont la valeur indique la version du protocole de communication utilisée par le dispositif concentrateur 110 et/ou le dispositif relais.

En effet, il est observé que chaque trame de gestion du réseau de type « balise » 300 comprend une charge utile. Quelle que soit la version du protocole de communication utilisée, les charges utiles présentent le même nombre d'octets. En revanche les charges utiles diffèrent quant à l'emplacement et/ou le nombre de bits des champs suivants : BCN.LEVEL, BCN.POS, BCN.COST, BCN.SEQ et BCN.FRQ. Ces différences induisent des différences sur le résultat du contrôle de redondance cyclique CRC.

En outre, il est aussi observé que selon une première version du protocole de communication, le résultat du contrôle de redondance cyclique CRC est déterminé en utilisant l'ensemble de la structure de la trame de gestion du réseau de type « balise » 300, à l'exception du résultat du contrôle de redondance cyclique CRC lui-même.

En revanche, selon une deuxième version du protocole de communication, le résultat du contrôle de redondance cyclique CRC est déterminé en utilisant l'ensemble de la structure de la trame de gestion du réseau de type « balise » 300, y compris le résultat du contrôle de redondance cyclique CRC lui-même auquel est affectée une valeur par défaut pour cette détermination.

Ainsi, pour les trames de gestion du réseau de type « balise » 300, le résultat du contrôle de redondance cyclique CRC est identique si les trames de gestion du réseau de type « balise » 300 sont envoyées en utilisant la même version du protocole de communication et le résultat du contrôle de redondance cyclique CRC diffère si les trame de gestion du réseau de type « balise » 300 sont envoyées en utilisant deux versions différentes du protocole de communication.

### Structure des demandes de promotion

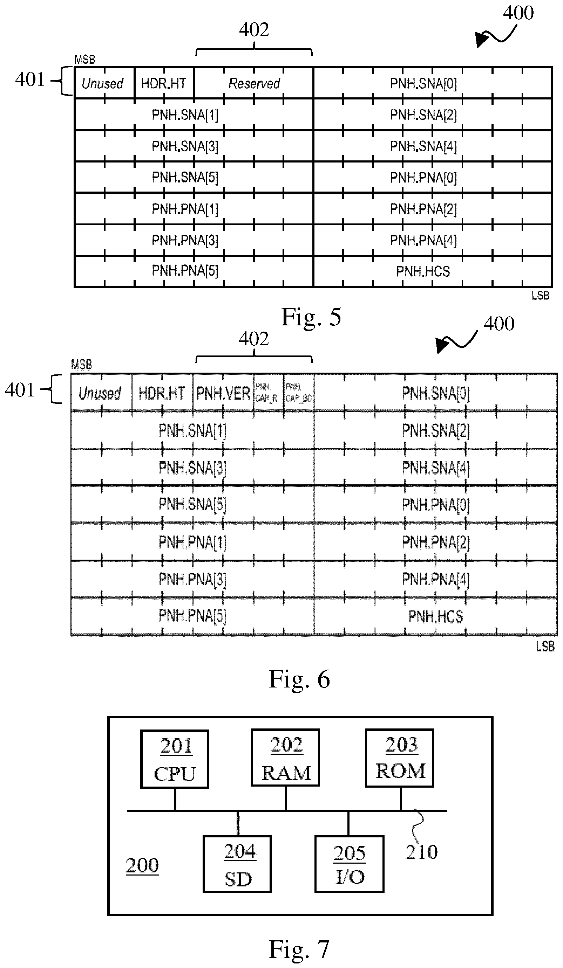

La Fig. 5 illustre schématiquement la structure d'une trame de gestion du réseau de type « demande de promotion » 400 envoyée en utilisant une première version du protocole de communication sur le réseau de communication 121.

La Fig. 6 illustre schématiquement la structure d'une trame de gestion du réseau de type « demande de promotion » 400 envoyée en utilisant une deuxième version du protocole de communication sur le réseau de communication 121.

Quelle que soit la version du protocole de communication utilisée, chaque trame de gestion du réseau de type « demande de promotion » 400 présente un champ de bits 401 qui est un octet de poids fort MSB comprenant quatre bits de poids faible 402, les quatre bits de poids faible 402 étant utilisés pour indiquer la version du protocole de communication utilisée par le dispositif concentrateur et/ou un autre dispositif nœud (130-139) agissant comme dispositif relais ou agissant comme dispositif terminal. Plus précisément, les quatre bits de poids faibles sont dits réservés (*reserved* en anglais). Ainsi, il est possible d'utiliser deux bits sur ces quatre bits pour distinguer deux versions du protocole de communication. Selon une disposition particulière, les deux bits utilisés sont les bits PNH.VER. Ainsi, selon une première version du protocole de communication, les deux bits PNH.VER peuvent être égaux à 00 et selon une deuxième version les deux bits PNH.VER peuvent être égaux à 01.

### Dispositif nœud

Selon un autre aspect, il est proposé un dispositif nœud 130-139 comprenant de la circuiterie électronique 200 pour exécuter le procédé 1.

### Système informatique

Selon un autre aspect, il est proposé un système informatique 200 comprenant de la circuiterie électronique configurée pour implémenter un procédé 100 de contrôle et de commutation de version d'un micrologiciel d'accès à un réseau de communication.

Tel que schématisé sur la Fig. 7, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, du procédé et des étapes décrits ici.

Tout ou partie du procédé et des étapes décrits ci-avant peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, les procédé et étapes décrits ci-avant en relation avec le système informatique 200 en question.

## Revendications

1. Procédé (1) de contrôle et de commutation de version d'un micrologiciel d'accès à un réseau de communication (121) qui a une topologie logique sous forme d'arbre de dispositifs nœuds (130-139) et qui est implémenté sur un réseau d'alimentation électrique, le réseau de communication (121) comprenant un dispositif concentrateur (110), le procédé étant implémenté par un dispositif nœud (130-139) comprenant de la circuiterie électronique (200) et le procédé étant **caractérisé en ce qu'**il comprend une première phase (I) comprenant les étapes suivantes :
- déclencher (4) une première temporisation (T1), et vérifier (5) la réception, durant la première temporisation (T1), d'une trame quelconque permettant d'identifier une version du protocole de communication utilisée par le dispositif concentrateur (110) ;
- si la version du micrologiciel utilisée par le dispositif nœud (130-139) implémente la version du protocole de communication utilisée par le dispositif concentrateur (110), alors réitérer la première phase (I), et sinon déclencher une deuxième phase (II) comprenant les étapes suivantes :
- déclencher (8) une deuxième temporisation (T2), et vérifier (9) la réception, durant la deuxième temporisation (T2), de trames de gestion du réseau de type « balise » émises par le dispositif concentrateur (110) ou par un autre dispositif nœud (130-140), et/ou de trames de gestion de réseau de type « demande de promotion » émises par un autre dispositif nœud (130-140), les trames de gestion du réseau permettant d'identifier une version du protocole de communication utilisée ;
- si un premier nombre prédéterminé M de trames de gestion du réseau de type « balise » reçues et/ou un deuxième nombre prédéterminé N de trames de gestion du réseau de type « demande de promotion » reçues permettent d'identifier une version du protocole de communication utilisée par le dispositif concentrateur (110) ou par un autre dispositif nœud (130-140), qui n'est pas implémentée par la version du micrologiciel utilisée par le dispositif nœud (130-140), alors commuter (10) le dispositif nœud (130-140) dans une autre version du micrologiciel qui implémente la version du protocole de communication utilisée par le dispositif concentrateur (110) ou par le dispositif relais, puis réitérer la première phase (I) ;
- si un nombre de trames de gestion du réseau de type « balise » reçues est strictement supérieur à zéro et strictement inférieur au premier nombre prédéterminé M et si un nombre de trames de gestion du réseau de type « demande de promotion » reçues est strictement supérieur à zéro et strictement inférieur au deuxième nombre prédéterminé N, alors réitérer la deuxième phase (II) ;
- si aucune trame de gestion du réseau n'est reçue, alors commuter (11) dans une autre version du micrologiciel, puis réitérer la première phase (I).

2. Procédé (1) selon la revendication 1, dans lequel chaque trame de gestion du réseau comprend un champ de bits (301, 401) dont la valeur est prédéfinie selon la version du protocole de communication utilisée, de sorte que la valeur du champ de bits (301, 402) indique la version du protocole de communication utilisée par le dispositif concentrateur (110) et/ou un autre dispositif nœud (130-140).

3. Procédé (1) selon l'une quelconque des revendications 1 ou 2, dans lequel les trames de gestion du réseau reçues qui sont de type « balise » (300) sont des intervalles de temps prédéfinis de trames transmises au sein du réseau de communication (121) et permettent à l'ensemble des dispositifs nœuds (130-139) de se synchroniser avec le dispositif concentrateur (110).

4. Procédé (1) selon la revendication 3, dans lequel le champ de bits (301) est un résultat d'un contrôle de redondance cyclique dont la valeur indique la version du protocole de communication utilisée par le dispositif concentrateur (110) et/ou un autre dispositif nœud (130-140).

5. Procédé (1) selon l'une quelconque des revendications 1 ou 2, dans lequel les trames de gestion du réseau reçues qui sont de type « demandes de promotions » (400) sont des intervalles de temps prédéfinis de trames transmises au sein du réseau de communication et permettent au dispositif concentrateur (110) de faire passer un dispositif nœud (130-139) en dispositif relais.

6. Procédé (1) selon la revendication 5, dans lequel le champ de bits (401) est un octet de poids fort comprenant quatre bits de poids faible (402), les quatre bits de poids faible (402) étant utilisés pour indiquer la version du protocole de communication utilisée par le dispositif concentrateur (110) et/ou un autre dispositif nœud (130-140).

7. Procédé selon l'une quelconque des revendications précédentes, dans lequel, lors de la deuxième phase (II), si aucune trame de gestion du réseau n'est reçue, alors le dispositif nœud commute (11) dans une autre version du micrologiciel qui implémente la version du protocole de communication utilisée par le dispositif concentrateur (110), puis réitère la première phase (I) en réinitialisant la première temporisation (T1) selon une valeur prédéterminée.

8. Procédé (1) selon l'une quelconque des revendications précédentes, comprenant une étape préalable d'initialiser la première temporisation (T1) et la deuxième temporisation (T2), selon des valeurs prédéterminées.

9. Procédé (1) selon l'une quelconque des revendications précédentes, dans lequel l'étape consistant à vérifier (9) la réception, durant la deuxième temporisation (T2), de trames de gestion du réseau, est réalisée en vérifiant la réception de trames de gestion du réseau émises par une pluralité de dispositifs du réseau de communication.

10. Dispositif nœud (130-139) comprenant de la circuiterie électronique (200) pour exécuter le procédé (1) selon l'une quelconque des revendications 1 à 9.

11. Produit programme d'ordinateur comprenant des instructions de code de programme pour exécuter le procédé (1) selon l'une quelconque des revendications 1 à 9, lorsque lesdites instructions sont exécutées par au moins un processeur (201).

12. Support de stockage non transitoire sur lequel est stocké un programme d'ordinateur comprenant des instructions de code de programme pour exécuter le procédé (1) selon l'une quelconque des revendications 1 à 9, lorsque lesdites instructions sont lues depuis ledit support de stockage non transitoire et exécutées par un processeur (201).

## Patentansprüche

1. Verfahren (1) zur Versionsprüfung und -umschaltung einer Firmware für den Zugang zu einem Kommunikationsnetzwerk (121), das eine logische Topologie in Form eines Baums aus Knotenvorrichtungen (130-139) hat und das in ein Stromversorgungsnetz implementiert ist, wobei das Kommunikationsnetzwerk (121) eine Konzentratorvorrichtung (110) umfasst, wobei das Verfahren von einer Knotenvorrichtung (130-139) implementiert wird, die eine elektronische Schaltungsanordnung (200) umfasst, und wobei das Verfahren **dadurch gekennzeichnet ist, dass** es eine erste Phase (I) umfasst, welche die folgenden Schritte umfasst:
- Auslösen (4) einer ersten Verzögerung (Tl) und Überprüfen (5) des Empfangens, während der ersten Verzögerung (T1), eines beliebigen Rahmens, der es ermöglicht, eine von der Konzentratorvorrichtung (110) verwendete Version des Kommunikationsprotokolls zu ermitteln;
- wenn die von der Knotenvorrichtung (130-139) verwendete Version der Firmware die von der Konzentratorvorrichtung (110) verwendete Version des Kommunikationsprotokolls implementiert, Wiederholen der ersten Phase (I), ansonsten Auslösen einer zweiten Phase (II), welche die folgenden Schritte umfasst:
- Auslösen (8) einer zweiten Verzögerung (T2) und Überprüfen (9) des Empfangens, während der zweiten Verzögerung (T2), von Netzwerkverwaltungsrahmen vom Typ "Beacon", die von der Konzentratorvorrichtung (110) oder von einer anderen Knotenvorrichtung (130-140) gesendet werden, und/oder von Netzwerkverwaltungsrahmen vom Typ "Promotion Request", die von einer anderen Knotenvorrichtung (130-140) gesendet werden, wobei die Netzwerkverwaltungsrahmen es ermöglichen, eine verwendete Version des Kommunikationsprotokolls zu ermitteln;
- wenn eine vorbestimmte erste Anzahl M von empfangenen Netzwerkverwaltungsrahmen vom Typ "Beacon" und/oder eine vorbestimmte zweite Anzahl N von empfangenen Netzwerkverwaltungsrahmen vom Typ "Promotion Request" es ermöglichen, eine von der Konzentratorvorrichtung (110) oder von einer anderen Knotenvorrichtung (130-140) verwendete Version des Kommunikationsprotokolls zu ermitteln, die von der von der Knotenvorrichtung (130-140) verwendeten Version der Firmware nicht implementiert ist, Umschalten (10) der Knotenvorrichtung (130-140) auf eine andere Version der Firmware, welche die von der Konzentratorvorrichtung (110) oder von der Relaisvorrichtung verwendete Version des Kommunikationsprotokolls implementiert, dann Wiederholen der ersten Phase (I);
- wenn eine Anzahl von empfangenen Netzwerkverwaltungsrahmen vom Typ "Beacon" strikt größer als null und strikt kleiner als die vorbestimmte erste Anzahl M ist und wenn eine Anzahl von empfangenen Netzwerkverwaltungsrahmen vom Typ "Promotion Request" strikt größer als null und strikt kleiner als die vorbestimmte zweite Anzahl N ist, Wiederholen der zweiten Phase (II);
- wenn kein Netzwerkverwaltungsrahmen empfangen wird, Umschalten (11) auf eine andere Version der Firmware, dann Wiederholen der ersten Phase (I).

2. Verfahren (1) nach Anspruch 1, wobei jeder Netzwerkverwaltungsrahmen ein Bit-Feld (301, 401) umfasst, dessen Wert je nach verwendeter Version des Kommunikationsprotokolls vorgegeben ist, so dass der Wert des Bit-Felds (301, 402) die von der Konzentratorvorrichtung (110) und/oder einer anderen Knotenvorrichtung (130-140) verwendete Version des Kommunikationsprotokolls angibt.

3. Verfahren (1) nach einem der Ansprüche 1 oder 2, wobei die empfangenen Netzwerkverwaltungsrahmen, die vom Typ "Beacon" (300) sind, vorgegebene Zeitintervalle von Rahmen sind, die in dem Kommunikationsnetzwerk (121) übertragen werden und es sämtlichen Knotenvorrichtungen (130-139) ermöglichen, sich mit der Konzentratorvorrichtung (110) zu synchronisieren.

4. Verfahren (1) nach Anspruch 3, wobei das Bit-Feld (301) ein Ergebnis einer zyklischen Redundanzprüfung ist, dessen Wert die von der Konzentratorvorrichtung (110) und/oder einer anderen Knotenvorrichtung (130-140) verwendete Version des Kommunikationsprotokolls angibt.

5. Verfahren (1) nach einem der Ansprüche 1 oder 2, wobei die empfangenen Netzwerkverwaltungsrahmen, die vom Typ "Promotion Request" (400) sind, vorgegebene Zeitintervalle von Rahmen sind, die in dem Kommunikationsnetzwerk übertragen werden und es der Konzentratorvorrichtung (110) ermöglichen, eine Knotenvorrichtung (130-139) in eine Relaisvorrichtung umzuwandeln.

6. Verfahren (1) nach Anspruch 5, wobei das Bit-Feld (401) ein höchstwertiges Byte ist, das vier niedrigstwertige Bits (402) umfasst, wobei die vier niedrigstwertigen Bits (402) verwendet werden, um die von der Konzentratorvorrichtung (110) und/oder einer anderen Knotenvorrichtung (130-140) verwendete Version des Kommunikationsprotokolls anzugeben.

7. Verfahren nach einem der vorhergehenden Ansprüche, wobei bei der zweiten Phase (II), wenn kein Netzwerkverwaltungsrahmen empfangen wird, die Knotenvorrichtung auf eine andere Version der Firmware umschaltet (11), welche die von der Konzentratorvorrichtung (110) verwendete Version des Kommunikationsprotokolls implementiert, dann die erste Phase (I) wiederholt, wobei die erste Verzögerung (T1) gemäß einem vorbestimmten Wert reinitialisiert wird.

8. Verfahren (1) nach einem der vorhergehenden Ansprüche, umfassend einen vorherigen Schritt des Initialisierens der ersten Verzögerung (T1) und der zweiten Verzögerung (T2) gemäß vorbestimmten Werten.

9. Verfahren (1) nach einem der vorhergehenden Ansprüche, wobei der Schritt, der darin besteht, das Empfangen, während der zweiten Verzögerung (T2), von Netzwerkverwaltungsrahmen zu überprüfen (9), ausgeführt wird, indem das Empfangen von Netzwerkverwaltungsrahmen überprüft wird, die von einer Mehrzahl von Vorrichtungen des Kommunikationsnetzwerks gesendet werden.

10. Knotenvorrichtung (130-139), umfassend eine elektronische Schaltungsanordnung (200) zum Ausführen des Verfahrens (1) nach einem der Ansprüche 1 bis 9.

11. Computerprogrammprodukt, das Programmcodeanweisungen umfasst, die bei der Ausführung der Anweisungen durch mindestens einen Prozessor (201) das Verfahren (1) nach einem der Ansprüche 1 bis 9 ausführen.

12. Medium zur nichtflüchtigen Speicherung, auf dem ein Computerprogramm gespeichert ist, das Programmcodeanweisungen umfasst, die beim Lesen der Anweisungen von dem Medium zur nichtflüchtigen Speicherung und Ausführen durch einen Prozessor (201) das Verfahren (1) nach einem der Ansprüche 1 bis 9 ausführen.

## Claims

1. Method (1) for controlling and switching a version of firmware for access to a communication network (121) that has a logical topology in the form of a tree of node devices (130-139) and is implemented on an electrical supply network, the communication network (121) comprising a concentrator device (110), the method being implemented by a node device (130-139) comprising electronic circuitry (200) and the method being **characterised in that** it comprises a first phase (I) comprising the following steps:
- triggering (4) a first time delay (T1) and checking (5) the reception, during the first time delay (T1), of a frame of any type making it possible to identify a version of the communication protocol used by the concentrator device (110);
- if the version of the firmware used by the node device (130-139) is implementing the version of the communication protocol used by the concentrator device (110), then reiterating the first phase (I), and otherwise triggering a second phase (II) comprising the following steps:
- triggering (8) a second time delay (T2), and checking (9) the reception, during the second time delay (T2), of network management frames of the "beacon" type sent by the concentrator device (110) or by another node device (130-140), and/or of network management frames of the "promotion request" type sent by another node device (130-140), the network management frames making it possible to identify a version of the communication protocol used;
- if a first predetermined number M of network management frames of the "beacon" type received and/or a second predetermined number N of network management frames of the "promotion request" type received make it possible to identify a version of the communication protocol used by the concentrator device (110) or by another node device (130-140) that is not implemented by the version of the firmware used by the node device (130-140), then switching (10) the node device (130-140) into another version of the firmware that implements the version of the communication protocol used by the concentrator device (110) or by the relay device, and then reiterating the first phase (I);
- if a number of network management frames of the "beacon" type received is strictly greater than zero and strictly smaller than the first predetermined number M and a number of network management frames of the "promotion request" type received is strictly greater than zero and strictly smaller than the second predetermined number N, then reiterating the second phase (II);
- if no network management frame is received, then switching (11) into another version of the firmware, and then reiterating the first phase (I).

2. Method (1) according to claim 1, wherein each network management frame comprises a bit field (301, 401) the value of which is predefined according to the version of the communication protocol used, so that the value of the bit field (301, 402) indicates the version of the communication protocol used by the concentrator device (110) and/or another node device (130-140).

3. Method (1) according to either one of claims 1 or 2, wherein the network management frames received that are of the "beacon" type (300) are predefined time slots of frames transmitted in the communication network (121) and enable all the node devices (130-139) to synchronise with the concentrator device (110).

4. Method (1) according to claim 3, wherein the bit field (301) is a result of a cyclic redundancy check the value of which indicates the version of the communication protocol used by the concentrator device (110) and/or another node device (130-140).

5. Method (1) according to either one of claims 1 or 2, wherein the network management frames received that are of the "promotion request" type (400) are predefined time slots of frames transmitted in the communication network and enable the concentrator device (110) to change a node device (130-139) into a relay device.

6. Method (1) according to claim 5, wherein the bit field (401) is a most significant byte comprising four least significant bits (402), the four least significant bits (402) being used to indicate the version of the communication protocol used by the concentrator device (110) and/or another node device (130-140).

7. Method according to any one of the preceding claims, wherein, during the second phase (II), if no network management frame is received, then the node device switches (11) into another version of the firmware that implements the version of the communication protocol used by the concentrator device (110), and then reiterates the first phase (I) while reinitialising the first time delay (T1) according to a predetermined value.

8. Method (1) according to any one of the preceding claims, comprising a prior step of initialising the first time delay (T1) and the second time delay (T2), according to predetermined values.

9. Method (1) according to any one of the preceding claims, wherein the step consisting in checking (9) the reception, during the second time delay (T2), of network management frames is performed by checking the reception of network management frames sent by a plurality of devices of the communication network.

10. Node device (130-139) comprising electronic circuitry (200) for executing the method (1) according to any one of claims 1 to 9.

11. Computer program product comprising program code instructions for executing the method (1) according to any one of claims 1 to 9, when said instructions are executed by at least one processor (201).

12. Non-transient storage medium on which a computer program product is stored, comprising program code instructions for executing the method (1) according to any one of claims 1 to 9, when said instructions are read from said non-transient storage medium and executed by a processor (201).
